# EUROPÄISCHE PATENTSCHRIFT

(11) **EP 2 810 803 B1**
(45) Veröffentlichungstag und Bekanntmachung des Hinweises auf die Patenterteilung: **22.11.2017**
(21) Anmeldenummer: 13171001.4
(22) Anmeldetag: 07.06.2013
(51) Int. Cl.: B60J 7/06, B60J 7/10, B60P 1/02, B62D 53/06

(54) **Planenbefestigungsvorrichtung für einen Sattelanhänger mit Hubdach**
Tarpaulin fixing device for a semitrailer with rising roof
Dispositif de fixation de bâche pour un semi-remorque avec toit relevable

(43) Veröffentlichungstag der Anmeldung: 10.12.2014
(73) Patentinhaber: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(56) Entgegenhaltungen:
- DE-A1- 2 507 434
- DE-U1- 29 614 479
- FR-A1- 2 676 692
- FR-A1- 2 832 366
- US-A1- 2009 041 557

## Beschreibung

### Technisches Gebiet

Die vorliegende Erfindung betrifft eine Planenbefestigungsvorrichtung für ein Fahrzeug wie z.B. einen Sattelanhänger, insbesondere für einen Sattelanhänger mit einem höhenverstellbaren Hubdach.

### Technischer Hintergrund

Sattelanhänger können über eine Sattelkupplung mit einem Zugfahrzeug verbunden werden und weisen üblicherweise ein Rahmengestell auf, das zumindest einen Teil eines Laderaums für Transportgüter bereitstellt. Das Rahmengestell besteht zumeist aus einer ebenen Grundfläche, die die Ladefläche bildet, und mehreren vertikalen Streben, die sich von der Grundfläche nach oben erstrecken.

Ferner ist es bekannt, ein bewegliches Hubdach am Rahmengestell zu befestigen. Ein solches Hubdach ist zwischen einer eingefahren Position und einer ausgefahrenen Position höhenverstellbar. Dabei dient die ausgefahrene Position dazu, eine vergrößerte Öffnung für die Transportgüter zu schaffen, wodurch der Zugang zum Laderaum während des Be- und Entladevorgangs des Sattelanhängers vereinfacht wird. Eine beispielhafte Ausführungsform für einen Nutzfahrzeugaufbau mit Hubdach und Seitenplane ist aus der DE 20 2012 104 195 U1 sowie DE29614479 bekannt.

Ferner ist aus der FR 2 832 366 A1 eine Spannvorrichtung für flexible Seitenwände eines Fahrzeugs bekannt, die über einen Riemen die Seitenwand am Fahrzeug befestigt.

Eine Plane kann auf wenigstens einer Seite des Sattelanhängers befestigt und wie eine Gardine zwischen einer geöffneten und einer geschlossen Stellung verschiebbar sein. Dabei ist die Plane am Hubdach über Schienen befestigt, die die Verschiebbarkeit der Plane ermöglichen. Beispielsweise ist die Plane aus der geschlossenen Stellung die geöffnete Position dadurch bringbar, dass die Plane von vorne nach hinten geschoben wird und sich die Plane im hinteren Bereich zusammenschiebt. Somit kann der Sattelanhänger von der wenigstens einen Seite be- und entladen werden. Nach dem Be- bzw. Entladevorgang wird das Hubdach aus der ausgefahrenen Position wieder in die eingefahrene Position gebracht. Zudem wird die Plane in die geschlossenen Position verschoben und im Beispiel von vorne und unten am Rahmengestell befestigt, so dass sich die Plane nicht versehentlich während der Fahrt öffnen kann.

Das Hubdach muss sich in der eingefahrenen Stellung befinden, damit die Plane am Rahmengestell befestigt werden kann, da die bekannten Planen und deren Befestigungsvorrichtungen nur für die Befestigung in der eingefahrenen Position des Hubdachs ausgelegt sind.

Ein der Erfindung zugrunde liegendes technisches Problem besteht darin, einen Nutzfahrzeugaufbau mit Hubdach und Seitenplane bereitzustellen, der einen erweiterten Nutzungsgrad zulässt. Zudem ist eine verbesserte Befestigungsvorrichtung für einen solchen Nutzfahrzeugaufbau bereitzustellen.

### Darstellung der Erfindung

Gemäß der vorliegenden Erfindung weist eine Befestigungsvorrichtung zum Befestigen einer Plane eines Nutzfahrzeugaufbaus mit Rahmengestell, das zusammen mit der Plane einen Laderaum begrenzt, und mehreren Vorsprüngen, einen Hauptkörper auf, der eine erste Öffnung und eine zweite Öffnung umfasst. Die erste Öffnung ist dazu ausgebildet ist, den Hauptkörper an der Plane zu befestigen und mit einem der mehreren Vorsprünge einzugreifen, wenn sich die Plane in einer ersten Position befindet. Die wenigstens eine zweite Öffnung im Hauptkörper ist dazu ausgebildet, mit einem der mehreren Vorsprünge einzugreifen, wenn sich die Plane in einer zweiten Position befindet.

Mit der erfindungsgemäßen Befestigungsrichtung ist es möglich, die Plane am Rahmengestell unabhängig von deren Position zu befestigen. Beispielsweise kann die erste und zweite Position der Plane von der Stellung eines sich am Rahmengestell befestigten Hubdachs abhängen. Befindet sich z. B. das Hubdach in einer eingefahrenen Position, so befindet sich die Plane in der ersten Position, in der die erste Öffnung mit dem wenigstens einen Vorsprung eingreift und somit die Plane am Rahmengestell befestigt. Befindet sich z. B. dass Hubdach in einer wenigstens teilweise ausgefahrenen Position, so befindet sich die Plane in der zweiten Position, in der die wenigstens eine zweite Öffnung mit dem wenigstens einen Vorsprung eingreift und somit die Plane am Rahmengestell befestigt.

Die erfindungsgemäße Befestigungsvorrichtung kann gleichermaßen auch für Anhänger ohne Hubdach oder andere Nutzfahrzeugaufbauten verwendet werden, weshalb die hierin offenbarte Befestigungsvorrichtung flexibel einsetzbar ist.

Bei einem mit der erfindungsgemäßen Befestigungsrichtung ausgestatteten Sattelanhänger kann die Plane am Hubdach und am Rahmengestell befestigt sein und somit der Sattelanhänger auch dann bewegt werden, wenn sich das Hubdach in einer wenigstens teilweise ausgefahrenen Position befindet. Ein ausgefahrenes Hubdach stellt einen vergrößerten Laderaum bereit, so dass ein größeres Transportvolumen transportiert werden kann.

Eine beispielhafte Ausführungsform sieht vor, dass die wenigstens eine zweite Öffnung ein Langloch ist, so dass die Plane über die Befestigungsvorrichtung am Rahmengestell in jeder beliebigen, teilweise oder ganz ausgefahrenen Stellung des Hubdachs befestigt werden kann.

Ferner ist es bevorzugt, die erste Öffnung in einer dreieckigen Form bereitzustellen. Dabei kann die erste Öffnung dazu ausgebildet sein, an wenigstens einem sich von der Plane erstreckenden Verbindungsgurt befestigt zu werden und gleichzeitig auch mit dem wenigstens einen Vorsprung einzugreifen, wenn sich die Plane in der ersten Position befindet, beispielsweise wenn das Hubdach in der eingefahrenen Position ist. Eine solche dreieckige Konfiguration der ersten Öffnung kann eine optimierte Krafteinleitung in den Hauptkörper der Befestigungsvorrichtung ermöglichen.

Der Hauptkörper der Befestigungsvorrichtung ist bevorzugt ein plattenartiger Körper. Somit kann die Befestigungsvorrichtung mit der ersten und wenigstens einen zweiten Öffnung einfach und kostengünstig hergestellt werden. Bevorzugt besteht der Hauptkörper der Befestigungsvorrichtung aus Stahl,

Edelstahl, Aluminium, Kupfer oder einem anderem geeigneten Material, das den auftretenden Zugkräften standhalten kann. Alternativ ist die Form des Hauptkörpers mit der ersten und wenigstens einen zweiten Öffnung auch durch ein gebogenes Rundmaterial wie Rundstahl oder dergleichen hergestellt.

Ein weiterer Aspekt der vorliegenden Erfindung betrifft einen Nutzfahrzeugaufbau mit einem Rahmengestell und wenigstens einen am Rahmengestell befestigten Vorsprung. Wenigstens an einer Seite des Rahmengestells ist eine verschiebbar befestigte Plane vorhanden, die zusammen mit dem Rahmengestell einen Laderaum begrenzt. Wenigstens eine erfindungsgemäße Befestigungsvorrichtung, wie sie hierin offenbart ist, ist an der Plane über die erste Öffnung befestigt ist.

Ein weiterer Aspekt der vorliegenden Erfindung betrifft einen Sattelanhänger mit einem erfindungsgemäßen Nutzfahrzeugaufbau und einem Hubdach, das relativ zum Rahmengestell zwischen einer eingefahrenen Position und einer ausgefahrenen Position höhenverstellbar ist. Dabei ist die erste Öffnung der Befestigungsvorrichtung ferner dazu ausgebildet ist, mit dem wenigstens einen Vorsprung einzugreifen, wenn sich das Hubdach in der eingefahrenen Position befindet, und die wenigstens eine zweite Öffnung ist ferner dazu ausgebildet, mit dem wenigstens einen Vorsprung einzugreifen, wenn sich das Hubdach in einer wenigstens teilweise ausgefahrenen Position befindet.

Bevorzugt befindet sich der wenigstens eine Vorsprung auf einer sich am Rahmengestell befestigen Welle, die über eine Betätigungsvorrichtung drehbar ist, so dass der Vorsprung mittels der Befestigungsvorrichtung die Plane am Rahmengestell verriegeln oder entriegeln kann. Dabei kann vorgesehen sein, dass die Betätigungsvorrichtung die Welle aus einer mittleren Normalstellung, in der die Befestigungsvorrichtung mit dem wenigstens einen Vorsprung in Eingriff gebracht und gelöst werden kann, in eine Verriegelungsstellung, in der der wenigstens eine Vorsprung derart gedreht wird, dass die wenigstens eine Befestigungsvorrichtung die Plane nach unten zieht und somit strafft, oder eine Entriegelungsstellung, in der der wenigstens eine Vorsprung derart gedreht wird, dass sich die wenigstens eine Befestigungsvorrichtung von dem wenigstens einen Vorsprung löst und somit die Plane verschoben werden kann, gedreht werden kann.

### Kurze Beschreibung der Zeichnungen

Weitere Merkmale und Aspekte dieser Offenbarung werden durch die folgende Beschreibung und die beiliegenden Zeichnungen offensichtlich in denen:
Fig. 1 eine schematische Seitenansicht eines Sattelanhängers zeigt, der ein sich in der ausgefahrenen Position befindliches Hubdach und eine erfindungsgemäße Befestigungsvorrichtung aufweist,
Fig. 2 eine perspektivische Unteransicht des Rahmengestells des Sattelanhängers der Fig. 1 zeigt, in der die Befestigungsvorrichtung von dem wenigstens einen Vorsprung gelöst ist, und
Fig. 3 eine Draufsicht einer exemplarisch offenbarten Befestigungsvorrichtung darstellt.

### Ausführliche Beschreibung von Ausführungsbeispielen

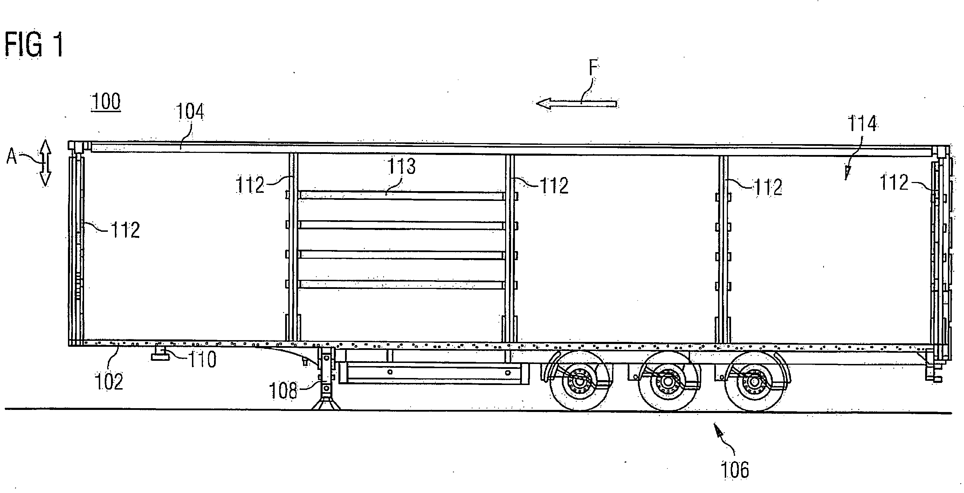

Eine beispielhafte Ausführungsform der vorliegenden Erfindung ist aus den Fig. 1 bis 3 ersichtlich. Der darin gezeigte Sattelanhänger 100 umfasst ein Rahmengestell 102, ein am Rahmengestell 102 höhenverstellbar angebrachtes Hubdach 104, ein am Rahmengestell 102 angebrachtes Fahrwerk 106, eine Stütze 108 und eine Verbindungseinrichtung 110 zum Verbinden des Sattelanhänger 100 mit einem Zugfahrzeug (nicht gezeigt). Die Verbindungseinrichtung 110 kann, wie in der Fig. 1 dargestellt, ein sogenannter Königszapfen sein, der in eine sich am Zugfahrzeug befindende Sattelkupplung eingreifen kann.

Das Rahmengestell 102 weist vertikale Streben 112 auf, die gemeinsam mit dem Hubdach und einer in der Fig. 1 nicht explizit dargestellten Plane 120 einen Laderaum 114 begrenzen. Zur Versteifung der vertikalen Streben 112 sind zusätzlich horizontale Streben 113 vorgesehen. Die vertikalen Streben 112 sind als Teleskopstreben ausgebildet, um die Höhenverstellbärkeit des Hubdaches 104 zu gewährleisten

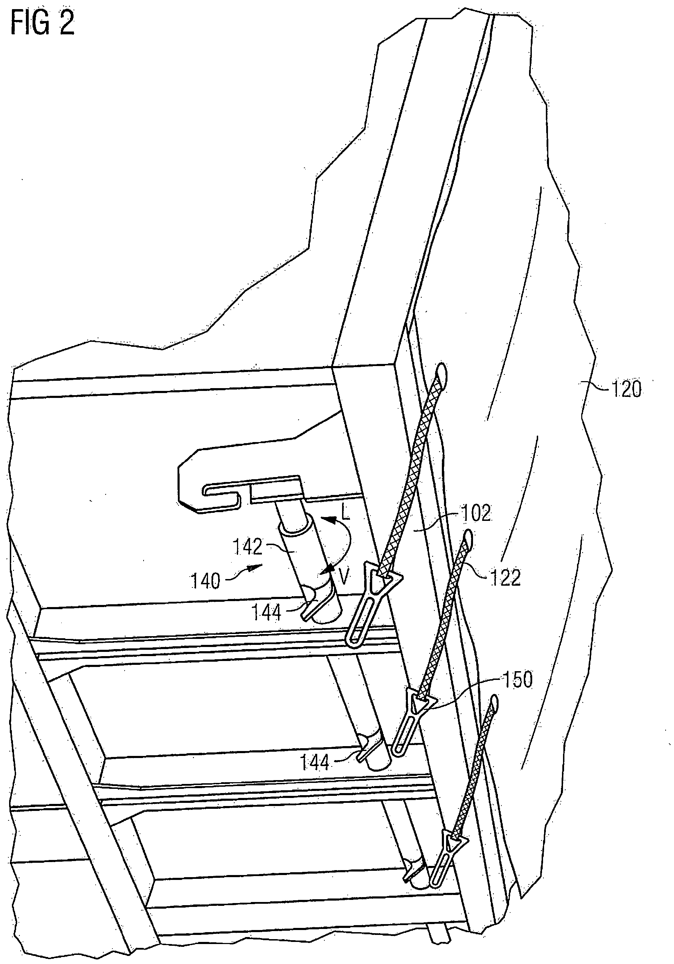

Die obere Seite der Plane 120 (siehe Fig. 2) ist am Hubdach 104 derart befestig, dass die Plane 120 von vorne nach hinten parallel zu einer Längsrichtung F des Sattelanhängers 100 wie eine Gardine bewegt werden kann, um den Laderaum 114 von einer Sattelanhängerseite zugänglich zu machen. Die Beweglichkeit der Plane 120 kann mittels einem Schienensystem (in den Zeichnungen nicht explizit dargestellt) ermöglicht werden. Wird die Plane 120 aus der geschlossenen Position in die geöffnete Position verschoben, können Transportgüter von der Sattelanhängerseite in den Laderaum 114 gebracht werden.

Wird ferner das Hubdach 104 in die ausgefahrene Position gebracht, ist der Laderaum 114 vergrößert und die Beladung des Laderaums 114 vereinfacht. Der Doppelpfeil A der Fig. 1 stellt die Bewegungsrichtungen des Hubdachs 106 dar.

Um das Hubdach 104 aus der eingefahrenen Position in die ausgefahrene Position zu bewegen, kann am Sattelanhänger 100 eine Bewegungsvorrichtung (in den Zeichnungen nicht explizit dargestellt) vorgesehen sein, die mechanisch, pneumatisch, hydraulisch oder elektrisch arbeitet.

Ist die Plane 120 in der geschlossenen Position, d. h. wenn die Öffnung zum Laderaum 114 verschlossen ist, so kann die Plane 120 über eine Befestigungsvorrichtung 150 am Rahmengestell befestigt werden.

In der Fig. 2 ist eine Unteransicht auf das Rahmengestell 102 gezeigt, in der die Plane 120 zwar in der geöffneten Stellung ist, aber nicht am Rahmengestell 102 befestigt ist. Wie die Fig. 2 zeigt, weist das Rahmengestells 102 eine Verriegelungsvorrichtung 140 auf, die eine drehbare Welle 142 und wenigstens einen daran befestigten Vorsprung 144 aufweist. Der Vorsprung 144 ist bevorzugt als Haken ausgebildet und die Welle 142 ist bevorzugt über eine Betätigungsvorrichtung (in den Zeichnungen nicht explizit dargestellt) in eine Verriegelungsrichtung V und eine Löserichtung L drehbar, so dass der wenigstens eine Vorsprung 144 aus einer verriegelten Stellung in eine gelöste Stellung drehbar ist.

Die Plane 120 weist wenigstens einen Gurt 122 auf, an dem wenigstens eine erfindungsgemäße Befestigungsvorrichtung 150 befestigt ist. Der wenigstens eine Gurt 122 erstreckt sich von der Plane 120 im Wesentlichen nach unten und bildet einen Übergang zwischen der der Plane 120 und der Befestigungsvorrichtung 150. Soll die Plane 120 in der geschlossenen Position am Rahmengestell befestigt werden, wird die Befestigungsvorrichtung 150 mit den Vorsprüngen 144 in Eingriff gebracht und die Welle 142 in der Verriegelungsrichtung V gedreht, so dass die Plane 120 im Wesentlichen nach unten gezogen und gestrafft wird und somit am unteren Bereich des Rahmengestells 102 befestigt ist.

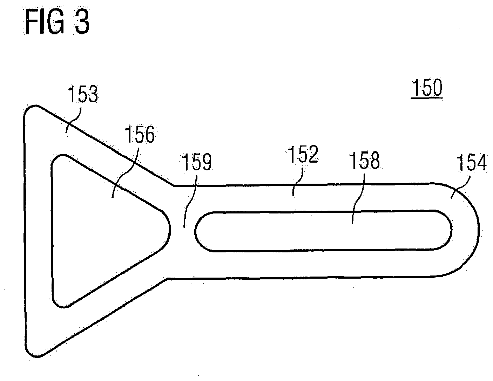

Die Befestigungsvorrichtung 150 ist in der Fig. 3 genauer dargestellt. Die Befestigungsvorrichtung 150 weist einen Hauptkörper 152 auf, der einen ersten Bereich 153 und einen zweiten Bereich 154 umfasst. Bevorzugt ist der Hauptkörper 150 beispielsweise als plattenförmiges Körper mit im Wesentlichen konstanter Dicke ausgebildet. Der erste Bereich 153 ist mit einer ersten Öffnung 156 versehen und der zweite Bereich 154 ist mit einer zweiten Öffnung 158 versehen.

Der erste Bereich 153 hat im Wesentlichen eine dreieckige Gestalt, wobei sich der zweite Bereich 154 von einer Ecke des dreieckigen ersten Bereichs 153 in einer länglichen Gestalt erstreckt. Die erste Öffnung 156 weist ebenfalls eine im Wesentlichen dreieckige Form auf und die zweite Öffnung 158 ist in Form eines Langloches bereitgestellt. Die erste Öffnung 156 und die zweite Öffnung 158 sind durch einen Steg 159 voneinander getrennt.

Die Formen des ersten Bereichs 153, des zweiten Bereichs 154, der ersten Öffnung 156 und der zweiten Öffnung 158 sind nicht auf die in der Fig. 3 dargestellten Formen begrenzt und können jegliche Formen aufweisen, die dazu fähig ist, die Plane 120 an der Verriegelungsvorrichtung 140 zu befestigen Beispielsweise kann der Hauptkörper 150 mehrere zweite Öffnungen 158 aufweisen, die mit den Vorsprüngen 144 eingreifen können.

Die erste Öffnung 156 ist dazu ausgebildet, den Gurt 122 der Plane 120 aufzunehmen, wobei dadurch die Befestigungsvorrichtung 150 an der Plane 120 befestigt wird. Ferner ist die erste Öffnung 156 dazu ausgebildet, mit einem der Vorsprünge 144 einzugreifen, wenn sich das Hubdach 104 in der eingefahrenen Position befindet.

Die zweite Öffnung 158 ist dazu ausgebildet, mit einem der Vorsprünge 144 einzugreifen, wenn sich das Hubdach 104 in einer wenigstens teilweise ausgefahrenen Position befindet. Beispielsweise ist das Hubdach 104 im Bereich höhenverstellbar, so dass die erste Öffnung 156 bei wenigstens teilweise ausgefahrenem Hubdach 104 mit einem der Vorsprünge 144 nicht mehr in Eingriff zu bringen ist. In diesem Fall kann die zweite Öffnung 158 mit einem der Vorsprünge 144 in Eingriff gebracht werden. Um den gesamten Bewegungsbereich des Hubdachs 104 abdecken zu können, kann die zweite Öffnung 158 als Langloch vorgesehen sein. Im Übrigen kann das Hubdach um 50 mm oder mehr, insbesondere auch bis 150 mm oder mehr in der Höhe verstellbar sein.

In einer weiteren Ausführungsform können mehrere zweite Öffnungen 158 vorgesehen sein, die in Abhängigkeit des Ausfahrbetrags des Hubdachs 104 mit einem der Vorsprünge 144 in Eingriff gebracht werden können.

In einer noch weiteren Ausführungsform kann der Hauptkörper 152 ein zweigeteilter Hauptkörper mit einem ersten Hauptkörperteil, das die erste Öffnung 156 aufweist, und einem zweiten Hauptkörperteil, das die zweite Öffnung 158 aufweist, sein. In einer solchen Ausführungsform kann die Plane neben dem wenigstens einen Gurt 122 wenigstens einen zusätzlichen Gurt aufweisen. Dabei kann an dem wenigstens einem Gurt 122 der erste Hauptkörperteil befestigt sein und an dem wenigstens einen zusätzlichen Gurt der zweite Hauptkörperteil befestigt sein. Je nach Ausfahrbetrag des Hubdachs 104 kann der erste oder der zweite Hauptkörperteil mit einem der Vorsprünge 144 in Eingriff gebracht werden, um die Plane 120 am unteren Bereich des Rahmengestells zu befestigen.

Im Folgenden wird unter Verweis auf die Fig. 1 bis 3 die Verwendung der erfindungsgemäßen Befestigungsvorrichtung 150 genauer erläutert.

Um den Laderaum 114 zu be- oder entladen, wird die Plane 120 wie eine Gardine geöffnet. Um den Laderaum zu vergrößern, kann das Hubdach in die ausgefahrene Position bewegt werden. Nach Beendigung des Be- oder Entladevorgangs wird die Plane wieder in die geschlossene Position gebracht, wobei das Hubdach 104 in der wenigstens teilweise ausgefahrenen Stellung verbleiben kann.

Daraufhin werden die Befestigungsvorrichtungen 150 mit den Vorsprüngen 144 der Verriegelungsvorrichtung 140 in Eingriff gebracht. Befindet sich das Hubdach 104 in der eingefahrenen Position, werden die ersten Öffnungen 156 mit den Vorsprüngen 144 in Eingriff gebracht. Befindet sich jedoch das Hubdach in einer wenigstens teilweise ausgefahrenen Position, werden die zweiten Öffnungen 158 mit den Vorsprüngen 144 in Eingriff gebracht.

Sind die jeweiligen Öffnungen 156 bzw. 158 mit den Vorsprüngen 144 in Eingriff gebracht, kann die Welle 122 mittel der Betätigungsvorrichtung in Verriegelungsrichtung V gedreht wird. Dadurch werden sämtliche Vorsprünge 144 ebenfalls in der Verriegelungsrichtung V gedreht, so dass die Gurte 122 die Plane 120 in vertikaler Richtung straffen und die Plane 120 somit am Rahmengestell 102 befestigen.

Wird die Welle 142 über die Betätigungsvorrichtung in Löserichtung L gedreht, können alle Vorsprünge 144 gleichzeitig von den Befestigungsvorrichtungen 150 gelöst werden, um dann die Plane 120 wieder horizontal wie eine Gardine zum Öffnen des Laderaums 114 zu bewegen.

Obwohl die bevorzugten Ausführungsformen dieser Erfindung hierin beschrieben worden sind, können Verbesserungen und Modifikationen hierin eingearbeitet sein, ohne vom Schutzbereich der folgenden Ansprüche abzuweichen.

## Patentansprüche

1. Befestigungsvorrichtung (150) zum Befestigen einer Plane (120) eines Nutzfahrzeugaufbaus mit Rahmengestell (102), das zusammen mit der Plane (120) einen Laderaum (114) begrenzt, und mehreren Vorsprüngen (144), wobei die Befestigungsvorrichtung (150) aufweist:
- einen Hauptkörper (152);
- eine erste Öffnung (156) im Hauptkörper (152), die dazu ausgebildet ist, den Hauptkörper (152) an der Plane (120) zu befestigen und mit einem der mehreren Vorsprünge (144) einzugreifen, wenn sich die Plane (120) in einer ersten Position befindet, **gekennzeichnet durch**
- wenigstens eine zweite Öffnung (158) im Hauptkörper (152), die dazu ausgebildet ist, mit einem der mehreren Vorsprünge (144) einzugreifen, wenn sich die Plane (120) in einer zweiten Position befindet.

2. Befestigungsvorrichtung (150) nach Anspruch 1, wobei die zweite Öffnung (158) ein Langloch ist.

3. Befestigungsvorrichtung (150) nach einem der vorhergehenden Ansprüche, wobei die erste Öffnung (156) eine dreieckige Form aufweist.

4. Befestigungsvorrichtung (150) nach einem der vorhergehenden Ansprüche, wobei der Hauptkörper (152) ein plattenartiger Körper ist.

5. Befestigungsvorrichtung (150) nach einem der Ansprüche 1-3, wobei der Hauptkörper (152) aus einem stabförmigen Material wie Rundstahl geformt ist.

6. Befestigungsvorrichtung (150) nach einem der vorhergehenden Ansprüche, wobei der Hauptkörper (152) der Befestigungsvorrichtung (150) aus Stahl, Edelstahl, Aluminium oder Kupfer besteht.

7. Befestigungsvorrichtung (150) nach einem der vorhergehenden Ansprüche, wobei ein Verbindungselement wie ein Verbindungsgurt (122), das an der Plane (120) anzubringen ist, beispielsweise durch vernähen und/oder verkleben, in der ersten Öffnung (156) eingeschläuft ist.

8. Nutzfahrzeugaufbau, umfassend:
- ein Rahmengestell (102),
- wenigstens einen am Rahmengestell (102) befestigten. Vorsprung (144),
- wenigstens eine an einer Seite des Rahmengestells (102) verschiebbar befestigte Plane (120), die zusammen mit dem Rahmengestell (102) einen Laderaum (114) begrenzt, und
- wenigstens eine Befestigungsvorrichtung (150) nach einem der vorhergehenden Ansprüche, wobei die wenigstens eine Befestigungsvorrichtung (150) an der Plane (120) über die erste Öffnung (156) befestigt ist.

9. Nutzfahrzeugaufbau nach Anspruch 8, wobei die Plane (120) wenigstens einen Verbindungsgurt (122) aufweist, an dem der Hauptkörper (152) der Befestigungsvorrichtung (150) über die erste Öffnung (156) befestigt ist.

10. Nutzfahrzeugaufbau nach einem der Ansprüche 8 oder 9, wobei der Hauptkörper (152) einen ersten Hauptkörperteil, der die erste Öffnung (156) aufweist, und einen zweiten Hauptkörperteil, der die zweite Öffnung (158) aufweist, umfasst.

11. Sattelanhänger (100) mit:
einem Nutzfahrzeugaufbau nach einem der Ansprüche 8 bis 10, und
einem Hubdach (104), das relativ zum Rahmengestell (102) zwischen einer eingefahrenen Position und einer ausgefahrenen Position höhenverstellbar ist, wobei
die erste Öffnung (156) ferner dazu ausgebildet ist, mit einem zugeordneten Vorsprung (144) einzugreifen, wenn sich das Hubdach (104) in der eingefahrenen Stellung befindet, und
die wenigstens eine zweite Öffnung (158) ferner dazu ausgebildet ist, mit dem zugeordneten Vorsprung (144) einzugreifen, wenn sich das Hubdach (104) in einer nicht eingefahrenen Stellung befindet.

12. Sattelanhänger (100) nach Anspruch 11, wobei der wenigstens eine Vorsprung (144) auf einer sich am Rahmengestell (102) befestigen Welle (142) befindet, die über eine Betätigungsvorrichtung drehbar ist, so dass durch Drehen der Betätigungsvorrichtung der Vorsprung (144) die Plane (120) am Rahmengestell (102) verriegelt oder entriegelt, in dem dieser in die erste Öffnung (156) oder die wenigstens eine zweite Öffnung (158) eingreift bzw. außer Eingriff gelangt.

## Claims

1. A fixing device (150) for fixing a tarpaulin (120) of a commercial vehicle superstructure having a frame (102) which, together with the tarpaulin (120), defines a cargo space (114), and a plurality of protrusions (144), the fixing device (150) comprising:
- a main body (152);
- a first opening (156) within the main body (152), which is adapted to fix the main body (152) to the tarpaulin (120) and to engage with one of the plurality of protrusions (144) if the tarpaulin (120) is in a first position, **characterized by**
- at least one second opening (158) within in the main body (152), which is adapted to engage with one of the plurality of protrusions (144), if the tarpaulin (120) is in a second position.

2. The fixing device (150) of claim 1, wherein the second opening (158) is an elongated hole.

3. The fixing device (150) of one of the preceding claims, wherein the first opening (156) has a triangular shape.

4. The fixing device (150) of one of the preceding claims, wherein the main body (152) is a plate-like body.

5. The fixing device (150) of one of claims 1-3, wherein the main body (152) is formed of a bar-shaped material like round steel.

6. The fixing device (150) of one of the preceding claims, wherein the main body (152) of the fixing device (150) is formed of steel, stainless steel, aluminium or copper.

7. The fixing device (150) of one of the preceding claims, wherein a connecting element like a connecting strap (122), which connecting element can be affixed to the tarpaulin (120), e.g. by sewing and/or adhering, is looped in the first opening (156).

8. A commercial vehicle superstructure comprising:
- a frame (120),
- at least one protrusion (144) attached to the frame (120),
- at least one tarpaulin (120) slidably mounted to a side of the frame (102), which, together with the frame (102), defines a cargo space (114), and
- at least one fixing device (150) according to one of the preceding claims, wherein the at least one fixing device (150) is affixed to the tarpaulin (120) via the first opening (156).

9. The commercial vehicle superstructure of claim 8, wherein the tarpaulin (120) is provided with at least one connecting strap (122) to which the main body (152) of the fixing device (150) is affixed via the first opening (156).

10. The commercial vehicle superstructure of one of claims 8 or 9, wherein the main body (152) comprises a first main body portion provided with the first opening (156), and a second main body portion provided with the second opening (158).

11. A semitrailer (100) comprising:
a commercial vehicle superstructure according to one of claims 8 to 10, and
a lifting roof (104) being height-adjustable relative to the frame (102) between a retracted position and an extended position, wherein
the first opening (156) is further adapted to engage with an associated protrusion (144) if the lifting roof (104) is in the retracted position, and
the at least one second opening (158) is further adapted to engage with the associated protrusion (144) if the lifting roof (104) is in an extended position.

12. The semitrailer (100) of claim 11, wherein the at least one protrusion (144) is located on a shaft (142), which is mounted to the frame (102) and rotatable via an actuating device, such that, by means of rotating the actuating device, the protrusion (144) locks or unlocks the tarpaulin (120) with/from the frame (102), by engaging with or disengaging from the at least one first opening (156) or the at least one second opening (158).

## Revendications

1. Dispositif de fixation (150) pour la fixation d'une bâche (120) d'une carrosserie de véhicule utilitaire avec un bâti de cadre (102) qui délimite un espace de chargement (114) conjointement avec la bâche (120), et plusieurs saillies (144), dans lequel le dispositif de fixation (150) présente :
- un corps principal (152) ;
- une première ouverture (156) dans le corps principal (152) qui est réalisée afin de fixer le corps principal (152) sur la bâche (120) et de s'engager avec l'une des plusieurs saillies (144) lorsque la bâche (120) se situe dans une première position, **caractérisé par**
- au moins une seconde ouverture (158) dans le corps principal (152) qui est réalisée afin de s'engager avec l'une des plusieurs saillies (144) lorsque la bâche (120) se situe dans une seconde position.

2. Dispositif de fixation (150) selon la revendication 1, dans lequel la seconde ouverture (158) est un trou oblong.

3. Dispositif de fixation (150) selon l'une des revendications précédentes, dans lequel la première ouverture (156) présente une forme triangulaire.

4. Dispositif de fixation (150) selon l'une des revendications précédentes, dans lequel le corps principal (152) est un corps de type plaque.

5. Dispositif de fixation (150) selon l'une des revendications 1 à 3, dans lequel le corps principal (152) est constitué d'un matériau en forme de barre tel que de l'acier rond.

6. Dispositif de fixation (150) selon l'une des revendications précédentes, dans lequel le corps principal (152) du dispositif de fixation (150) se compose d'acier, d'acier spécial, d'aluminium ou de cuivre.

7. Dispositif de fixation (150) selon l'une des revendications précédentes, dans lequel un élément de liaison tel qu'une sangle de liaison (122) qui est à monter sur la bâche (120), par exemple par couture et/ou collage, est fixé par boucle dans la première ouverture (156).

8. Carrosserie de véhicule utilitaire comprenant
- un bâti de cadre (102),
- au moins une saillie (144) fixée sur le bâti de cadre (102),
- au moins une bâche (120) fixée de manière coulissante sur un côté du bâti de cadre (102) qui délimite un espace de chargement (114) conjointement avec le bâti de cadre (102), et
- au moins un dispositif de fixation (150) selon l'une des revendications précédentes, dans laquelle l'au moins un dispositif de fixation (150) est fixé sur la bâche (120) par le biais de la première ouverture (156) .

9. Carrosserie de véhicule utilitaire selon la revendication 8, dans laquelle la bâche (120) présente au moins une sangle de liaison (122), sur laquelle le corps principal (152) du dispositif de fixation (150) est fixé par le biais de la première ouverture (156).

10. Carrosserie de véhicule utilitaire selon l'une des revendications 8 ou 9, dans laquelle le corps principal (152) comporte une première partie de corps principal qui présente la première ouverture (156), et une seconde partie de corps principal qui présente la seconde ouverture (158).

11. Semi-remorque (100) avec :
une carrosserie de véhicule utilitaire selon l'une des revendications 8 à 10, et
un toit relevable (104) qui est réglable en hauteur par rapport au bâti de cadre (102) entre une position rentrée et une position sortie, dans laquelle
la première ouverture (156) est de plus réalisée afin de s'engager avec une saillie associée (144) lorsque le toit relevable (104) se situe dans la position rentrée, et
l'au moins une seconde ouverture (158) est de plus réalisée afin de s'engager avec la saillie associée (144) lorsque le toit relevable (104) se situe dans une position non rentrée.

12. Semi-remorque (100) selon la revendication 11, dans laquelle l'au moins une saillie (144) se situe sur un arbre (142) fixé sur le bâti de cadre (102) qui est rotatif par le biais d'un dispositif d'actionnement de sorte que par la rotation du dispositif d'actionnement, la saillie (144) verrouille ou déverrouille la bâche (120) sur le bâti de cadre (102), dans lequel celle-ci s'engage dans la première ouverture (156) ou l'au moins une seconde ouverture (158) ou parvient à se désengager de celle-ci.
